(19) Europäisches Patentamt
European Patent Office
Office européen des brevets

(11) **EP 4 769 119 A1**

(12) **EUROPEAN PATENT APPLICATION**

(43) Date of publication:
**01.07.2026 Bulletin 2026/27**

(21) Application number: **25220489.6**

(22) Date of filing: **03.12.2025**

(51) International Patent Classification (IPC):
**G06F 7/78** (2006.01)

(52) Cooperative Patent Classification (CPC):
**G06F 7/76**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **24.12.2024 CN 202411918837**

(71) Applicant: **Ant Group Co., Ltd.**
**Hangzhou, Zhejiang 310007 (CN)**

(72) Inventors:
- **LI, Xiaodong**
  **Hangzhou, Zhejiang, 310000 (CN)**
- **TANG, Xin**
  **Hangzhou, Zhejiang, 310000 (CN)**
- **SONG, Jie**
  **Hangzhou, Zhejiang, 310000 (CN)**

(74) Representative: **Winter, Brandl - Partnerschaft mbB**
**Alois-Steinecker-Straße 22**
**85354 Freising (DE)**

(54) **MATRIX TRANSPOSE METHOD, TRANSPOSE MODULE, AND CHIP**

(57) A matrix transpose method, a transpose module, and a chip are disclosed. The transpose module includes a first storage space, a second storage space, and N acceleration units. A first matrix is stored in the first storage space, and the first matrix corresponds to a first block array formed by blocks in M rows and N columns. The N acceleration units respectively correspond to N block columns. The method includes: An $i^{th}$ acceleration unit determines a row number j of a to-be-read block and position information of a transposed block based on i, M, and a quantity of times of reading by the $i^{th}$ acceleration unit; reads a first block from a block column i; transposes the first block to obtain a second block; and stores the second block in the second storage space based on the position information.

FIG. 2

**Description**

**TECHNICAL FIELD**

Embodiments in this specification relate to the field of computer technologies, and in particular, to a matrix transpose method, a transpose module, and a chip.

**BACKGROUND**

With enhancement of people's awareness about data security and privacy protection, privacy computing, as a new security computing mode, is gradually becoming one of mainstream methods for data processing and analysis. In the privacy computing, computing is directly performed on encrypted or anonymous data, without exposing original data, thereby protecting data privacy and security, and bringing a wide application prospect. Currently, the privacy computing technology has been widely applied to fields such as artificial intelligence, finance, and medical treatment, and becomes an important supporting technology of a digital society in the future. Homomorphic encryption is one of common mainstream technologies in the field of private computing, allows various common computing operations to be performed in an encrypted state, and ensures correctness of a result and privacy of data. The homomorphic encryption technology has been widely applied to scenarios such as cloud computing, data privacy protection, and secure multi-party computing, and is one of important technical means for protecting private data and implementing secure computing.

A fully homomorphic encryption (FHE) acceleration chip is a hardware device specifically designed to accelerate fully homomorphic encryption operations. The FHE acceleration chip improves efficiency of the fully homomorphic encryption operations by implementing specific mathematical operations at a hardware level.

The FHE acceleration chip is mainly configured to accelerate a number theoretic transform (NTT) operation and an automorphism (Automorphism) operation. A large amount of transpose processing is involved in the NTT and automorphism operations. High-performance transpose processing needs to be implemented, to implement efficient FHE acceleration. In an existing transpose solution, a to-be-transposed matrix is divided into a plurality of blocks, and different blocks are processed in parallel by a plurality of processing elements (PEs), to accelerate transposition. However, in this solution, the plurality of processing elements need to perform synchronous processing. If acceleration units are not synchronous, data between blocks is misaligned, resulting in errors in a final transposition result.

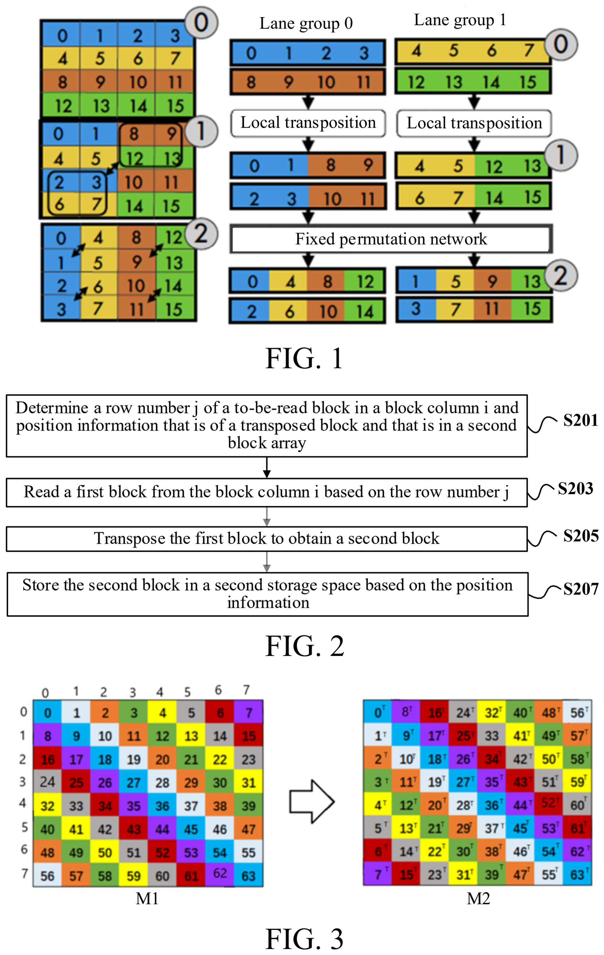

For example, in a transpose solution shown in FIG. 1, rows of an EG*EG matrix are cyclically distributed in lane groups, the matrix is divided into a plurality of G*G blocks, and transposition is decomposed into two steps: transposing an (EG/G)*(EG/G) block matrix, and transposing all the G*G blocks. FIG. 1 shows a process of transposing a 4*4 matrix (where EG=4) by using G=2 lane groups (that is, a lane group 0 and a lane group 1). The lane group 0 and the lane group 1 are, for example, two processing elements, and the 4*4 matrix is divided into a plurality of 2*2 blocks for processing. As shown in step ⓪ in FIG. 1, the lane group 0 is responsible for rows 0 of all 2*2 blocks, and the lane group 1 is responsible for rows 1 of all 2*2 blocks. In step ①, each lane group performs local transposition on four 1*2 sub-blocks included in the lane group. For example, the lane group 0 swaps positions of 2 and 3 with those of 8 and 9, and the lane group 1 swaps positions of 6 and 7 with those of 12 and 13. In step ②, the lane group 0 and the lane group 1 move elements between the lane groups by following a fixed mode. Specifically, a group i sends, to a group j, elements in a column j of all 1*2 sub-blocks that are included in the group i. In the solution, this is implemented by using a fixed permutation network between the lane groups.

In the foregoing solution, when the lane group 0 and the lane group 1 are respectively a processing unit A and a processing unit B, if processing of the processing units A and B is not synchronous, outputs of step ① may be misaligned. For example, that original {0, 1, 8, 9} and {4, 5, 12, 13} are aligned and output is changed into that {0, 1, 8, 9} and {6, 7, 14, 15} are aligned and output to the fixed permutation network. Consequently, a transpose result of step ② changes from correct {0, 4, 8, 12} and {1, 5, 9, 13} to incorrect {0, 6, 8, 14} and {1, 7, 9, 15}.

SUMMARY

An objective of the present invention is to provide a matrix transpose method, to improve correctness of matrix transposition.

According to a first aspect of this specification, a matrix transpose method is provided, performed by a transpose module, where the transpose module includes a first storage space, a second storage space, and N acceleration units, a first matrix is stored in the first storage space, the first matrix corresponds to a first block array formed by blocks in M rows and N columns, the N acceleration units respectively correspond to N block columns, and the method includes:

An $i^{th}$ acceleration unit determines, based on i, M, and a quantity of times the $i^{th}$ acceleration unit reads a block column i in the first block array, a row number j of a to-be-read block in the block column i, and position information that is of a transposed block corresponding to the to-be-read block and that is in a second block array, where the second block array corresponds to a second matrix, and the second matrix is a transposed matrix of the first matrix;

the ith acceleration unit reads a first block from the block column i based on the row number j of the to-be-read blocks;

the ith acceleration unit transposes the first block to obtain a second block; and

the ith acceleration unit stores the second block in the second storage space based on the position information.

According to a second aspect of this specification, a transpose module is provided, including a first storage space, a second storage space, and N acceleration units, where a first matrix is stored in the first storage space, the first matrix corresponds to a first block array formed by blocks in M rows and N columns, and the N acceleration units respectively correspond to N block columns; and

an ith acceleration unit corresponding to a block column i of the first block array is configured to perform the following operations:

determining, based on i, M, and a quantity of times the ith acceleration unit reads a block column i in the first block array, a row number j of a to-be-read block in the block column i, and position information that is of a transposed block corresponding to the to-be-read block and that is in a second block array, where the second block array corresponds to a second matrix, and the second matrix is a transposed matrix of the first matrix;

reading a first block from the block column i based on the row number j of the to-be-read blocks;

transposing the first block to obtain a second block; and

storing the second block in the second storage space based on the position information.

According to a third aspect of this specification, a chip is provided, including a processing element and the transpose module according to the second aspect, where the processing element is configured to store a first matrix into a first storage space, and instruct the transpose module to perform transpose processing on the first matrix.

In the matrix transpose solution in embodiments of this specification, after each processing element transposes respective block of the processing element, the processing element determines a write-back address of the block, to store the transposed block at a correct position based on the write-back address. This solution does not depend on synchronization processing between processing elements, thereby improving correctness of transpose processing.

## BRIEF DESCRIPTION OF THE DRAWINGS

To describe the technical solutions in embodiments of this specification more clearly, the following briefly describes the accompanying drawings required for describing embodiments. Apparently, the accompanying drawings in the following descriptions show merely some embodiments described in this specification, and a person of ordinary skill in the art may still derive other drawings from these accompanying drawings without creative efforts.

FIG. 1 is a schematic diagram of a process of a transpose method according to an embodiment;

FIG. 2 is a flowchart of a matrix transpose method according to an embodiment of this specification;

FIG. 3 to FIG. 8 are schematic diagrams of processes of matrix transposition according to embodiments of this specification;

FIG. 9 is a flowchart of a systolic array-based matrix transpose method according to an embodiment of this specification;

FIG. 10 is a schematic diagram of a systolic array according to an embodiment of this specification;

FIG. 11 is a schematic diagram of a process of storing a first block in a systolic array according to an embodiment of this specification;

FIG. 12 is a schematic diagram of a process of outputting data from a systolic array to a second storage space according to an embodiment of this specification;

FIG. 13 is a schematic diagram of a systolic array according to another embodiment of this specification;

FIG. 14 is a schematic diagram of a structure of a transpose module used in, for example, an FHE chip according to another embodiment of this specification; and

FIG. 15 is a schematic diagram of a structure of a MIN network according to an embodiment of this specification.

## DETAILED DESCRIPTION

To make a person skilled in the art understand the solutions in this specification better, the following describes the technical solutions in embodiments of this specification with reference to the accompanying drawings in embodiments of this specification. Apparently, the described embodiments are merely some but not all of embodiments of this specification. All other embodiments obtained by a person of ordinary skill in the art based on embodiments of this specification shall fall within the protection scope of this specification.

Matrix transposition is a matrix operation, and the operation interchanges rows and columns of a matrix. Specifically, assuming that

matrix $A = \begin{pmatrix} a_{11} & a_{12} & ... & a_{1n} \\ a_{21} & a_{22} & ... & a_{2n} \\ ... & ... & ... & ... \\ a_{m1} & a_{m2} & ... & a_{mn} \end{pmatrix}$, a transposed matrix of the matrix A is that $A^T = \begin{pmatrix} a_{11} & a_{21} & ... & a_{2m} \\ a_{12} & a_{22} & ... & a_{2n} \\ ... & ... & ... & ... \\ a_{1n} & a_{2n} & ... & a_{mn} \end{pmatrix}$.

With regard to the problem in the existing matrix transpose solution mentioned above, an embodiment of this specification provides a matrix transpose solution. After each processing element transposes respective block of the processing element, the processing element determines a write-back address of the block, to store the transposed block at a correct position based on the write-back address. This solution does not depend on synchronization processing between processing elements, thereby improving robustness of transpose processing.

FIG. 2 is a flowchart of a matrix transpose method according to an embodiment of this specification. The method shown in FIG. 2 may be performed by a transpose module in an FHE chip, and the transpose module may include a first storage space, a second storage space, and N acceleration units.

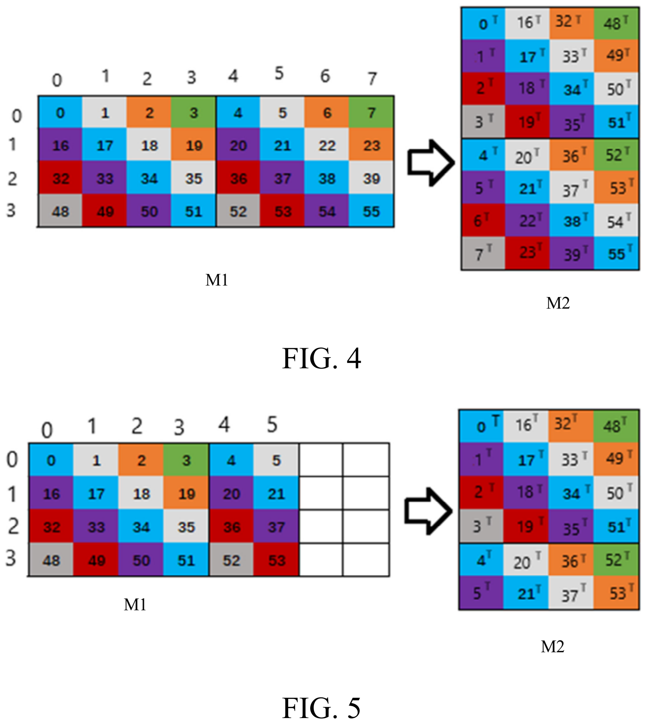

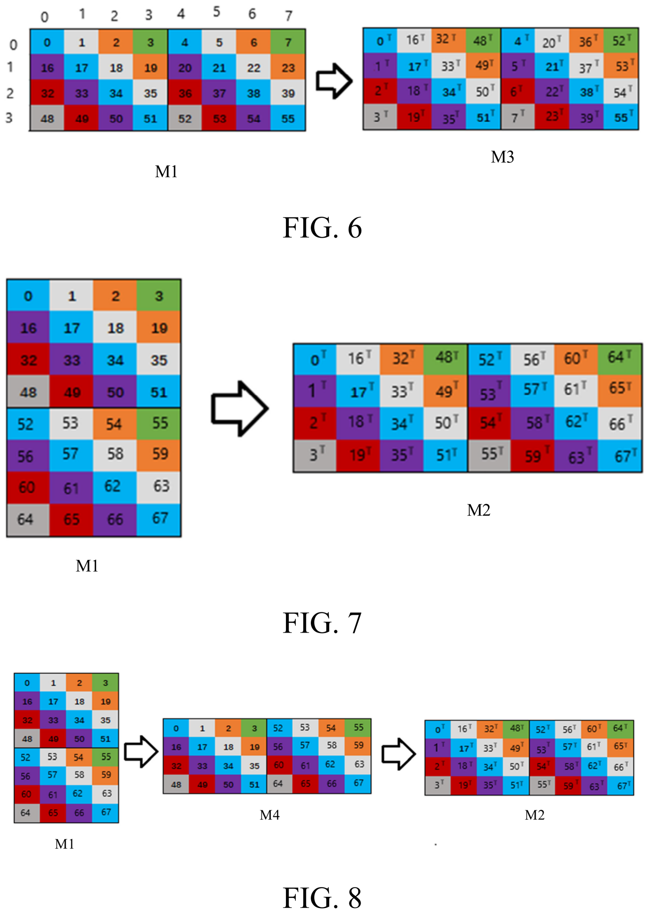

A to-be-transposed matrix M1 is stored in the first storage space, and the matrix M1 may be divided into a first block array formed by blocks in M rows and N columns, where each block may be a K$_*$K square matrix, or may be a non-square matrix. The N acceleration units respectively correspond to N block columns in the first block array. There may be the following relationships between M and N. M=N. In this case, an array formed by a plurality of blocks is a square matrix, for example, an array shown at a left side of FIG. 3. M<N. In this case, an array formed by a plurality of blocks is, for example, an array shown at a left side of FIG. 4, FIG. 5, or FIG. 6. M>N. In this case, an array formed by a plurality of blocks is, for example, an array shown at a left side of FIG. 7 or FIG. 8. FIG. 3 to FIG. 8 are schematic diagrams of processes of matrix transposition according to embodiments of this specification. Each cell in FIG. 3 to FIG. 8 represents a block in a block array.

The method shown in FIG. 2 includes that an $i^{th}$ acceleration unit corresponding to a block column i of the first block array performs the following steps.

Step S201: Determine, based on i, M, and a quantity of times the $i^{th}$ acceleration unit reads the block column i, a row number j of a to-be-read block in the block column i, and position information that is of a transposed block corresponding to the block and that is in a second block array, where the second block array corresponds to a matrix M2, and the matrix M2 is a transposed matrix of the matrix M1.

Step S203: Read a first block from the block column i based on the row number j of to-be-read blocks.

Step S205: Transpose the first block to obtain a second block.

Step S207: Store the second block in the second storage space based on the position information.

The foregoing N acceleration units may correspond to N processing elements, and specifically, each acceleration unit may include a processing element. The N processing elements may be, for example, processing elements in different computing cores. Because each computing core includes an independent instruction control unit of the computing core, instruction delivery of different computing cores is asynchronous, that is, different computing cores do not deliver instructions at the same time. Using the N processing elements to perform a matrix transpose solution in an existing technology may, as described in the background, result in errors in a transposition result.

In this embodiment of this specification, each of the N acceleration units independently processes a block column corresponding to the acceleration unit, and correctness of a processing result of the acceleration unit does not depend on whether processing of different acceleration units is synchronous. A processing process of the $i^{th}$ acceleration unit is separately described as an example below for three cases: M=N, M<N, and M>N. It may be understood that a processing process of each of the N acceleration units is the same as the processing process of the $i^{th}$ acceleration unit.

1. In the case that M=N, the matrix M1 is divided into an N$_*$N block array, that is, each block column includes N rows of blocks. For example, as shown in a left array of FIG. 3, the matrix M1 is divided into an 8$_*$8 block array, which includes eight block columns in total, where each block column includes eight rows of blocks. A number at a left side of the array at the left side of FIG. 3 represents a row number of the block, and a number at the upper part of the array represents column numbers of blocks.

First, in step S201, the $i^{th}$ acceleration unit determines the row number j of the to-be-read block and the position information of the transposed block based on i, M, and the quantity of times the $i^{th}$ acceleration unit reads the block column i.

In addition to the processing element, each acceleration unit may further include a register, to store a value of the quantity rt of times of reading. A value of "0" may be initially stored in the register, to indicate that the value of the quantity of times of reading is initially 0.

When reading a block for the first time (that is, the quantity of times of reading is 0), the $i^{th}$ acceleration unit may read a block in a row i from the block column i, that is, start reading from a block on a diagonal of the block array. After one block is processed each time, the quantity rt of times of reading is incremented by 1, and a row number j of a next to-be-read block is determined according to the following formula (1):

$$j = \begin{cases} i + rt, & rt < M - i \\ i + rt - M & M - i \leq rt < M \end{cases} \qquad (1)$$

Specifically, assuming that the block array at the left side of FIG. 3 includes column numbers of 0 to 7 and row numbers of 0 to 7, the N acceleration units are identified as a $0^{th}$ acceleration unit to a $7^{th}$ acceleration unit. When a quantity rt of times of reading by a $2^{nd}$ acceleration unit corresponding to a block column 2 is 0, it may be determined that a row number of a to-be-read block is 2, that is, the to-be-read block is a block 18. After completing processing on a block, the $i^{th}$ acceleration unit increments the quantity rt of times of reading by 1. For example, after completing processing on the block 18, the $2^{nd}$ acceleration unit increments, by 1, a value stored in a register corresponding to the $2^{nd}$ acceleration unit, so that rt=1. In this case, the $2^{nd}$ acceleration unit determines that the row number j of the to-be-read block is 2+rt=2+1=3, that is, the to-be-read block is a block 26. After completing processing on the block 26, the $2^{nd}$ acceleration unit updates the value of rt to 2. In this case, the $2^{nd}$ acceleration unit may determine that the row number of the to-be-read block is 2+rt=2+2=4. By analogy, this process continues until rt is updated to M-i=8-2=6. When rt is updated to 6, the $2^{nd}$ acceleration unit determines that the row number j of the to-be-read block is 2+rt-8=0, that is, the to-be-read block is a block 2 in a row 0 and a column 2. The $2^{nd}$ acceleration unit determines that reading of all blocks in the column 2 is completed after rt is updated to 7 and reading of blocks in a row 1 is completed.

The $i^{th}$ acceleration unit may determine the position information that is of the transposed block (the second block) corresponding to the to-be-read block (the first block) and that is in the matrix M2.

The position information may include a row number k and a column number t of the second block in a block array in the matrix M2. According to the foregoing matrix transpose rule, because the block array in the matrix M1 is a square matrix, the block array in the matrix M2 is also a square matrix, the row number k of the second block is equal to a column number i of the first block, and the column number t of the second block is equal to the row number j of the first block.

Step S203: The $i^{th}$ acceleration unit reads the first block from a row j of the block column i.

The first storage space may include N first sub-spaces, and a column of blocks in the first block array are stored in each first sub-space. The $i^{th}$ acceleration unit is connected to a read-write interface of an $i^{th}$ first sub-space. The $i^{th}$ acceleration unit may perform addressing in the first sub-space based on i, to read data in the row j in the block column i.

Step S205: Transpose the read first block to obtain the second block.

The $i^{th}$ acceleration unit may transpose the first block by using an existing matrix transpose method. Because the $i^{th}$ acceleration unit transposes the first block, there is no problem that different acceleration units asynchronously deliver instructions, and therefore, there is no problem that an incorrect transpose result is obtained. As shown at a right side of FIG. 3, the second block may be represented as a transposed form of the first block. For example, a transposed block corresponding to the block 18 is represented as $18^T$, and a transposed block corresponding to the block 26 is represented as $26^T$.

Step S207: The $i^{th}$ acceleration unit stores the second block in the second storage space based on the position information of the second block.

For example, the second storage space may include N second sub-spaces, and each second sub-space is used for storing a column of blocks in the second block array. After determining the row number k and the column number t of the second block as described above, the $i^{th}$ acceleration unit may provide the second block to a $t^{th}$ second sub-space, and instruct to store the second block in a row k in the $t^{th}$ second sub-space.

2. In the case that M<N, in an example, as shown in a matrix M1 at a left side of FIG. 4, a block array corresponding to the matrix M1 may be divided, in units of M*M matrices, into two horizontally arranged block square matrices. Each acceleration unit can perform transpose processing based on a block square matrix corresponding to the acceleration unit. In another example, when the matrix M1 cannot be exactly divided into an integer number of block matrices, refer to a matrix M1 at a left side of FIG. 5. After two blank block columns are padded to the matrix M1, a padded block array can be divided into two block square matrices, and each acceleration unit can similarly perform transpose processing based on a block square matrix corresponding to the acceleration unit. A processing process shown in FIG. 4 is used as an example for description below. It may be understood that, in a processing process shown in FIG. 5, each acceleration unit performs processing similar to that in the process shown in FIG. 4.

First, in step S201, the $i^{th}$ acceleration unit determines, based on i, M, and the quantity of times the $i^{th}$ acceleration unit reads the block column i, the row number j of the to-be-read block and the position information that is of the transposed block corresponding to the block and that is in the second block array.

When the $i^{th}$ acceleration unit reads a block for the first time (that is, the quantity of times of reading is 0), refer to FIG. 4. When a column i corresponding to the $i^{th}$ acceleration unit is in a block square matrix at a left side of the matrix M1, a block in a row i may be read from a block column i, that is, a block is read from a diagonal of the block square matrix. When the column i corresponding to the $i^{th}$ acceleration unit is in a block square matrix at a right side of the matrix M1, a column number s in the block square matrix corresponding to the column i may be first determined, and then a block in a row s may be read from a block column i. After one block is processed each time, the quantity rt of times of reading is incremented by 1, and a row number j of a next to-be-read block is determined based on the quantity rt of times of reading and the row number i or s.

Therefore, the $i^{th}$ acceleration unit may determine the row number j of the to-be-read block according to the following formula (2):

$$j = \begin{cases} i + rt, & rt < M - i, \ i < M \\ i + rt - M & M - i \leq rt < M, i < M \\ s + rt, & rt < M - s, \ i \geq M \\ s + rt - M & M - s \leq rt < M, i \geq M \end{cases} \quad (2)$$

A parameter s in the formula (2) is a column number of the column i in the block square matrix corresponding to the column i, that is, s=i mod M. It may be understood that the formula (1) is a special case of the formula (2) when $i < M$.

Specifically, refer to FIG. 4. Assuming that the block array at the left side of FIG. 4 includes column numbers of 0 to 7 and row numbers of 0 to 3, the N acceleration units are identified as a $0^{th}$ acceleration unit to a $7^{th}$ acceleration unit. The block array may be divided into two block square matrices of 4 rows * 4 columns. According to the formula (2), when i=2<M=4, upper two formulas in the formula (2) are applicable. When a quantity rt of times of reading by a $2^{nd}$ acceleration unit is 0, it may be determined that a row number of a to-be-read block is 2, that is, the to-be-read block is a block 34. When rt is updated to 2, the $2^{nd}$ acceleration unit determines that the row number j of the to-be-read block is 2+rt-4=0, that is, the to-be-read block is a block 2 in a row 0 and a column 2.

When i=6>4, lower two formulas in the formula (2) are applicable, where i=6, and s=6 mod 4=2. When rt=0, a $6^{th}$ acceleration unit may determine that a row number j of a to-be-read block is 2, and the to-be-read block is a block 38 on a diagonal of the block array at the right side of the matrix M1 in FIG. 4. When rt=2, the $6^{th}$ acceleration unit may determine that the row number j of the to-be-read block is $s + rt - M = 2 + 2 - 4 = 0$, and the to-be-read block is a block 6 in a column 6 and a row 0.

The $i^{th}$ acceleration unit further determines the position information that is of the transposed block (the second block) corresponding to the to-be-read block (the first block) and that is in the second block array. The second block array is shown as a block array at a right side of FIG. 4, and is a block array obtained by performing block division on the matrix M2.

The position information may include a row number k and a column number t of the second block in the second block array. The row number k of the second block is equal to the column number i of the first block in the first block array, and the column number t of the second block is equal to the row number j of the first block in the first block array.

Specifically, for a to-be-read block 34, a row number k=i=2 and a column number t=j=2 of a transposed block $34^T$ of the to-be-read block 34 may be determined. For a to-be-read block 2, a row number k=i=2 and a column number t=j=0 of a transposed block $2^T$ of the to-be-read block 2 may be determined.

Then, the $i^{th}$ acceleration unit reads the first block from the row j in the block column i, transposes the read first block to obtain the second block, and stores the second block in the second storage space based on the row number k and the column number t.

In transpose processes shown in FIG. 4 and FIG. 5, columns of the second blocks corresponding to the first blocks that are computed by different acceleration units in the N acceleration units are the same column. For example, the $2^{nd}$ acceleration unit and a $5^{th}$ acceleration unit may simultaneously compute that a transposed block $17^T$ of a block 17 corresponds to a block column 1 in the second block array, and a transposed block $21^T$ of a block 21 corresponds to the block column 1 in the second block array. When the second storage space is divided into four vertical sub-spaces (that is, a $0^{th}$ sub-space to a $3^{rd}$ sub-space) to store each block column, it is possible that both the transposed block $17^T$ and the transposed block $21^T$ need to be stored in the $1^{st}$ sub-space of the second storage space. This may result in an increase in storage time.

Therefore, refer to FIG. 6. The N acceleration units may respectively transpose the two block square matrices in the matrix M1, so that a second block array corresponding to a matrix M3 shown at a right side of FIG. 6 is stored in the second storage space. In this case, columns of transposed blocks computed by the acceleration units do not overlap with each other, to avoid the foregoing increased storage time. In comparison between FIG. 4 and FIG. 6, the matrix M3 in FIG. 6 is equivalent to the matrix M2 that has undergone horizontal expansion. After reading the matrix M3 from the transpose module, a computing device may splice two block square matrices of the second block array corresponding to the matrix M3 into the matrix M2 shown in FIG. 4, to obtain the transposed matrix M2 of the matrix M1. Alternatively, when outputting matrix data, the transpose module may output rows of the block square matrices in order of the two block square matrices. For example, first, rows of blocks of the block square matrix at the left side of the second block array are sequentially output, then rows of blocks of the block square matrix at the right side of the second block array are sequentially output, and the sequentially output rows of blocks are arranged into the block array corresponding to the matrix M2 in FIG. 4, so that the transposed matrix M2 of the matrix M1 can be obtained.

For a process shown in FIG. 6, specifically, the $i^{th}$ acceleration unit may still determine a row number j of a to-be-read block according to the foregoing formula (2), and determine position information that is of a transposed block corresponding to the block and that is in the second block array. The position information may include a row number k and a column number t of the second block in the second block array. The row number k of the second block is equal to a column number i of the first block mod M, and the column number t of the second block is equal to j + (i//M) $*$ M, where "//" represents integer division. Specifically, for a to-be-read block 34, a row number k=i mod 4=2 and a column number t=2+0=2 of a transposed block $34^T$ of the to-be-read block 34 may be determined. For a to-be-read block 37, a row number k=5 mod 4=1 and a column number t=2+4=6 of a transposed block $37^T$ of the to-be-read block 37 may be determined.

Then, the $i^{th}$ acceleration unit may read the first block from the row j in the block column i of the first block array, transposes the read first block to obtain the second block, and stores the second block in the second storage space based on the row number k and the column number t of the second block.

3. In the case that M>N, as shown in a matrix M1 at a left side of FIG. 7, a block array corresponding to the matrix M1 may be divided, in units of M$*$M matrices, into two vertically arranged block square matrices. Each acceleration unit can perform transpose processing based on a $1^{st}$ block square matrix starting from a row 0.

First, in step S201, the $i^{th}$ acceleration unit determines, based on i, M, and the quantity of times the $i^{th}$ acceleration unit reads the block column i, the row number j of the to-be-read block and the position information that is of the transposed block and that is in the second block array.

When reading a block for the first time (that is, the quantity of times of reading is 0), the $i^{th}$ acceleration unit may read a block in a row i from the block column i, that is, start reading from a block on a diagonal of a $1^{st}$ block square matrix in the matrix M1. After one block is processed each time, the quantity rt of times of reading is incremented by 1, and a row number j of a next to-be-read block is determined according to the following formula (3):

$$\mathrm{j} = \begin{cases} i + rt, & rt < M - i \\ i + rt - M & M - i \leq rt < M \end{cases} \qquad (3)$$

Specifically, assuming that the block array at the left side of FIG. 7 includes column numbers of 0 to 3 and row numbers of 0 to 7, the N acceleration units are identified as a $0^{th}$ acceleration unit to a $3^{rd}$ acceleration unit. When a quantity rt of times of reading by a $2^{nd}$ acceleration unit corresponding to a block column 2 is 0, it may be determined that a row number of a to-be-read block is 2, that is, the to-be-read block is a block 34. After completing processing on a block, the $i^{th}$ acceleration unit increments the quantity rt of times of reading by 1. For example, after completing processing on the block 34, the $2^{nd}$ acceleration unit increments, by 1, a value stored in a register corresponding to the $2^{nd}$ acceleration unit, so that rt=1. In this case, the $2^{nd}$ acceleration unit determines that the row number j of the to-be-read block is 2+rt=2+1=3, that is, the to-be-read block is a block 50. After completing processing on the block 50, the $2^{nd}$ acceleration unit updates the value of rt to 2. In this case, the $2^{nd}$ acceleration unit may determine that the row number of the to-be-read block is 2+rt=2+2=4, that is, the to-be-read block is a block 54. By analogy, this process continues until rt is updated to M-i=8-2=6. When rt is updated to 6, the $2^{nd}$ processing element determines that the row number j of the to-be-read block is 2+rt-8=0, that is, the to-be-read block is a block 2 in a row 0 and a column 2. The $2^{nd}$ processing element determines that reading of all blocks in the column 2 is completed after rt is updated to 7 and reading of blocks in a row 1 is completed.

The $i^{th}$ acceleration unit further determines the position information that is of the second block and that is in the second block array corresponding to the matrix M2. The position information may include a row number k and a column number t of the second block in the second block array. According to the foregoing matrix transpose rule, the row number k of the second block is equal to the column number i of the first block, and the column number t of the second block is equal to the row number j of the first block.

Then, the $i^{th}$ acceleration unit may read the first block from the row j of the block column i of the first block array, transposes the read first block to obtain the second block, and stores the second block in the second storage space.

In a transpose process shown in FIG. 7, the $i^{th}$ acceleration unit needs to store two columns (for example, a column i and a column (i+M)) of blocks in the second block array in two sub-spaces in the second storage space, causing an increase in time of the transpose process.

Therefore, refer to FIG. 8. Before storage into the first storage space, a lower block square matrix of a matrix M1 may first be placed at a right side of an upper block square matrix, to obtain a matrix M4 including blocks in 4 rows and 8 columns. The matrix M4 is then stored in the first storage space. In another embodiment, the matrix M1 may be directly stored in the first storage space. In the first storage space, upper four columns of blocks of the matrix M1 and lower four columns of blocks of the matrix M1 are respectively stored in eight first sub-spaces. This is equivalent to providing a block array of 4 rows $*$ 8 columns.

In this case, a left block square matrix and a right block square matrix in a first block array corresponding to the matrix M4 may be respectively transposed through the same process shown in FIG. 6, to obtain a transposed matrix M2 shown in FIG. 8.

In the foregoing solution, the N acceleration units respectively corresponding to the N block columns of the first block array separately process, based on the column number i, quantities of times of reading by the acceleration units, and the row number of the first block array, blocks in the column i, to transpose the matrix M1, so as to obtain the matrix M2. In this solution, the N acceleration units do not need to perform synchronization processing, thereby improving robustness of transpose processing.

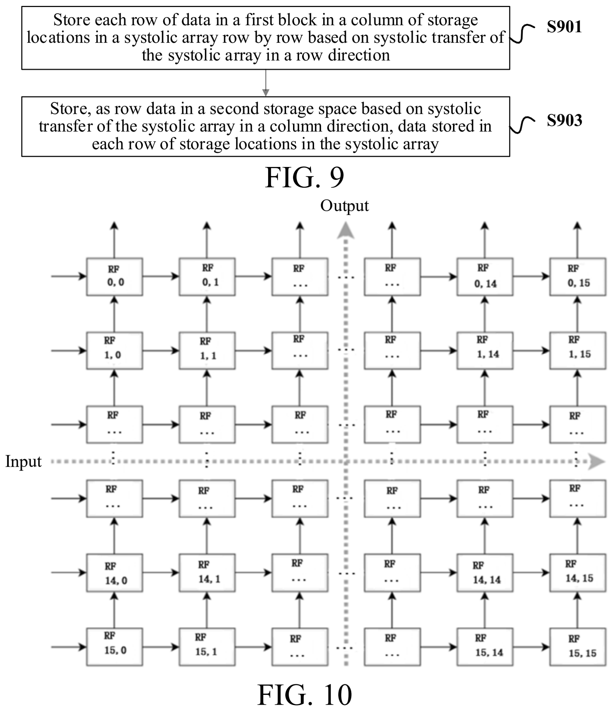

FIG. 9 is a flowchart of a systolic array-based matrix transpose method according to an embodiment of this specification. The method shown in FIG. 9 may be performed, for example, by a transpose module in an FHE chip. The transpose module may include a first storage space and a second storage space. The first storage space is used for storing a to-be-transposed matrix (or a first block array). The second storage space is used for storing a transposed matrix (or a second block array). The to-be-transposed matrix M1 is, for example, a matrix with a size of E*F. Descriptions are provided below by using an example in which the matrix M1 is a 128*128 square matrix. It may be understood that for a processing process of a non-square matrix, refer to the following processing of a square matrix. The matrix M1 may be divided into a plurality of blocks, and each block has a size of, for example, 16*16, so that the matrix M1 may be divided into 8*8 blocks.

The transpose module may further include a systolic array. The systolic array includes, for example, 16*16 storage locations. Each storage location includes a storage space of one or more bytes, used for storing one element in one block, so that one block in the matrix can be transposed. When the foregoing block is not a square matrix, the storage location included in the systolic array may be set based on a size of the block, or the systolic array may be set as a square matrix, to be applicable to blocks of different sizes.

Each storage location in the systolic array includes at least one input port and two output ports, to respectively perform a systolic processing on data in a row direction and a column direction of the array.

FIG. 10 is a schematic diagram of a systolic array according to an embodiment of this specification. As shown in FIG. 10, the systolic array includes, for example, 16*16 registers (RFs) used as a plurality of storage locations, and further includes a logic circuit (not shown in FIG. 10) for controlling systolic timing. Two numbers in each register represent a row number and a column number of the register in the systolic array, for example, "0, 1" represents that the register is located in a row 0 and a column 1 in the array. Each register in the row 0 to a row 14 includes two input ports and two output ports.

For example, for a register marked "0, 0" (referred to as $RF_{0,0}$ below), an arrow at a left side of the register is an input port, configured to input data from the outside of the systolic array, and an arrow at a right side of the register is an output port, configured to output data stored in the register to a register (that is, $RF_{0,1}$) at the right side of the register. An arrow at a lower side of the register is an input port, configured to input data from a register (that is, $RF_{1,0}$) at the lower side of the register, and an arrow at an upper side of the register is an output port, configured to output the data stored in the register to the outside of the systolic array. For ease of description, in the following, the arrow at the left side of the register is referred to as a first input port, the arrow at the right side of the register is referred to as a first output port, the arrow at the lower side of the register is referred to as a second input port, and the arrow at the upper side of the register is referred to as a second output port. First input ports of registers in a column 0 of the systolic array form input (input) ports of the systolic array, and second output ports of registers in the row 0 form output (output) ports of the systolic array.

For $RF_{1,1}$, a first input port at a left side of $RF_{1,1}$ is configured for the register (that is, $RF_{1,0}$) at the left side of $RF_{1,1}$ to input data, a second output port at an upper side of $RF_{1,1}$ is configured to output data to the register (that is, $RF_{0,1}$) at the upper side of $RF_{1,1}$. Functions of the first output port and the second input port of $RF_{1,1}$ are the same as those of $RF_{0,0}$.

Each register in a row 15 includes a first input port, a first output port, and a second output port. Functions of the three ports are the same as those of ports at a same position in registers in other rows in a same column. Details are not described herein again.

The register may include a flip-flop and a gate circuit. The flip-flop includes the first input port, the first output port, the second input port, and the second output port. The gate circuit is configured to implement data storage. The flip-flop may read data and output data under triggering of a clock signal. A trigger signal input to each register in the systolic array is controlled, so that systolic transfer of data between registers can be implemented.

Refer to FIG. 9. First, step S901: Store each row of data in a first block in a column of storage locations in the systolic array row by row based on systolic transfer of the systolic array in the row direction.

The first block may be a block of q rows and p columns, and the transpose module may store data in the first block in the systolic array by using the following steps: reading p pieces of data in a row i of the first block from the first storage space; for data stored in storage locations in a column 0 to a column (i-1) in the systolic array, sequentially migrating, starting from the storage locations in the column (i-1), data in first p storage locations in each column to first p storage locations in a next column; and respectively storing p pieces of data in a row i in first p storage locations in the column 0 of the systolic array.

The following describes the foregoing steps in detail by using an example in which the first block is a square matrix. It may be understood that, for a case that the first block is a non-square matrix, reference may be made to the following descriptions for processing similarly.

It is assumed that the to-be-transposed first block in the matrix M1 is a 16*16 square matrix shown below:

$$
\begin{matrix}
10 & 20 & 30...40 & 50 & 60 \\
11 & 21 & 31...41 & 51 & 61 \\
12 & 22 & 32...42 & 52 & 62 \\
... & ... & ...\ \ ... & ... & ... \\
13 & 23 & 33...43 & 53 & 63 \\
14 & 24 & 34...44 & 54 & 64 \\
15 & 25 & 35...45 & 55 & 65
\end{matrix}
$$

A logic circuit is preset in the foregoing systolic array, and is configured to enable each register in the systolic array to read data through a first input port in a 1st clock cycle to a 16th clock cycle, and read data through a second input port of the register in a 17th clock cycle to a 32nd clock cycle.

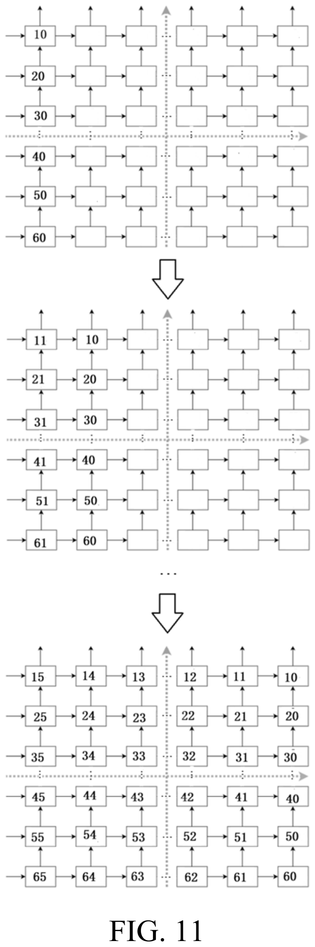

FIG. 11 is a schematic diagram of a process of storing a first block in a systolic array according to an embodiment of this specification.

Refer to a systolic array at the top of FIG. 11. A transpose module first reads each piece of data in a row 1 of a first block from a first storage space. Registers in a column 1 are triggered in a 1st clock cycle, and the registers in the column 1 obtain data from the outside of the systolic array through first input ports based on timing of a logic circuit, to respectively store data (that is, 10, 20, 30, ..., 40, 50, and 60) in registers in a column 0 of the systolic array.

Refer to a systolic array in the middle of FIG. 11. The transpose module first triggers registers in a column 1 in a 2nd clock cycle, so that the registers in the column 1 read, through first input ports of the registers from registers in a column 0, data, that is, 10, 20, 30, ..., 40, 50, and 60, stored in the registers in the column 0, and respectively store the data in the registers in the column 1. Then the transpose module triggers the registers in the column 0, so that the registers in the column 0 obtains data (that is, 11, 21, 31, ..., 41, 51, and 61) in a row 2 of the first block.

In other words, the systolic transfer of the systolic array in the row direction (that is, a left-right direction) is implemented through the foregoing operation, so that, by analogy, each row of data in the first block can be stored in a column of storage locations in the systolic array.

Refer to a systolic array at the bottom of FIG. 11. The transpose module first triggers registers in a column 15 in a 16th clock cycle, so that the registers in the column 15 read, through first input ports of the registers from registers in a column 14, data, that is, 10, 20, 30, ..., 40, 50, and 60, stored in the registers in the column 14, and respectively store the data in the registers in the column 15. Then the transpose module triggers the registers in the column 14, so that the registers in the column 14 read, through first input ports of the registers from registers in a column 13, data, that is, 11, 21, 31, ..., 41, 51, and 61, stored in the registers in the column 13, and respectively store the data in the registers in the column 14. By analogy, this process continues until registers in a column 0 are triggered, so that the registers in the column 0 obtain data in a row 16 of the first block, that is, 15, 25, 35, ..., 45, 55, and 65.

In other words, all elements of the first block are stored in the systolic array during 16 clock cycles.

Step S903: Store, as row data in the second storage space based on systolic transfer of the systolic array in the column direction, data stored in each row of storage locations in the systolic array.

When the first block is a block of q rows and p columns, the transpose module may store data in the systolic array in the second storage space by using the following steps: reading q pieces of data in a row 0 in the systolic array, and storing the read q pieces of data as row data in the second storage space based on positions of the read q pieces of data in a transposed block; and for each row after the row 0 in the systolic array, sequentially migrating data in first q storage locations in the column to first q storage locations in a previous column starting from a row 1.

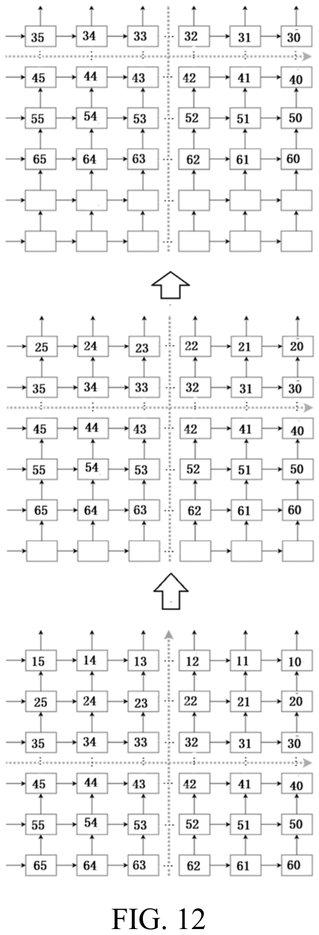

FIG. 12 is a schematic diagram of a process of outputting data from a systolic array to a second storage space according to an embodiment of this specification.

Refer to a systolic array at the bottom of FIG. 12, in a 17th clock cycle, a transpose module first outputs data at storage locations in a row 0, and stores each piece of data in a form of row data in a row 1 of a position corresponding to a first block. It is assumed that, in the second storage space, for continuous addresses used for storing a row 1 of a transposed block of the first block, data of a lower column number in the row is stored in a higher-order address, and data of a higher column number in the row is stored in a lower-order address. Therefore, data in a register of a higher column in the row 0 of the systolic array may be stored in a higher-order address of a row 1 of the second storage space, and data in a register of a lower column in the row 0 of the systolic array is stored in a lower-order address of the row 1 of the second storage space, so that data of the row 1 of the transposed block stored in the second storage space is 10, 11, 12, ..., 13, 14, and 15. Then, in the systolic array, registers in the row 0 are triggered to respectively read data from registers in a row 1 through second input ports of the registers and store the data in the registers in the row 0. Then the registers in the row 1 are triggered to respectively read data from registers in a row 2 through second input ports of the registers and store the data in the registers in the row 1. By analogy, this process continues until registers in a row 14 are triggered to respectively read data from registers in a row 15 through second input ports of the registers and store the data in the registers in the row 14. The registers in the row 15 may eliminate stored data after the registers in the row 14 outputs the data, to obtain a systolic array in the middle of FIG. 12.

Refer to the systolic array at the bottom of FIG. 12, in a 18th clock cycle, the transpose module first outputs data at storage locations in a row 0, and stores each piece of data in a form of row data in a row 2 of a position corresponding to the first block. Refer to the foregoing descriptions, after the storage, data in a row 2 of the transposed block stored in the second storage space is 20, 21, 22, ..., 23, 24, and 25. Then, in the systolic array, registers in the row 0 to a row 13 are sequentially triggered to read data from next rows of the row 0 to the row 13 through second input ports of the row 0 to the row 13 and store the data, to obtain a systolic array shown at the top of FIG. 12.

In other words, the systolic transfer of the systolic array in the column direction (that is, an up-down direction) is implemented through the operation shown in FIG. 12. By analogy, all data stored in the systolic array may be stored at a position corresponding to the first block in the second storage space, and a transposed matrix of the first block is stored at the position, which is:

$$
\begin{matrix}
10 & 11 & 12...13 & 14 & 15 \\
20 & 21 & 22...23 & 24 & 25 \\
30 & 31 & 32...33 & 34 & 35 \\
... & ... & ... & ... & ... & ... \\
40 & 41 & 42...43 & 44 & 45 \\
50 & 51 & 52...53 & 54 & 55 \\
60 & 61 & 62...63 & 64 & 65
\end{matrix}
$$

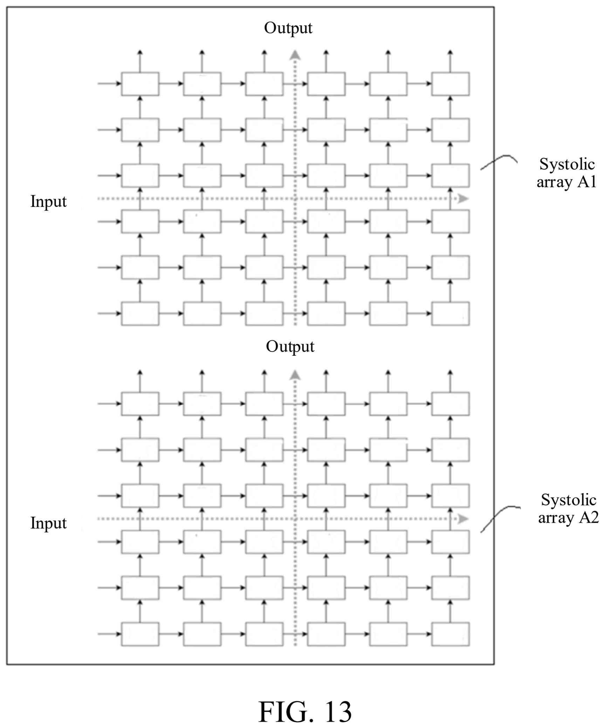

FIG. 13 is a schematic diagram of a systolic array according to another embodiment of this specification. As shown in FIG. 13, a transpose module may include a systolic array A1 and a systolic array A2 that have a same structure as the systolic array shown in FIG. 10. An input port of the systolic array A1 and an input port of the systolic array A2 may both be connected to a first storage space, allowing both to read blocks from the first storage space. In addition, an output port of the systolic array A1 and an output port of the systolic array A2 may both be connected to a second storage space, allowing both to store transposed blocks in the second storage space. In this structure, after data of a first block is stored in the systolic array A1 during a 1st clock cycle to a 16th clock cycle as described above, when a transposed block of the first block is stored from the systolic array A1 to the second storage space during a 17th clock cycle to a 32nd clock cycle, data of a second block in a matrix M1 is stored in the systolic array A2 in a same manner as that for storing the first block above. During a 33rd clock cycle to a 48th clock cycle, when a transposed block of the second block is stored from the systolic array A2 to the second storage space, similarly, data of a third block in the matrix M1 may be stored into the systolic array A1. Therefore, a plurality of blocks in the matrix M1 can be processed in a pipelined manner, thereby improving matrix transpose efficiency.

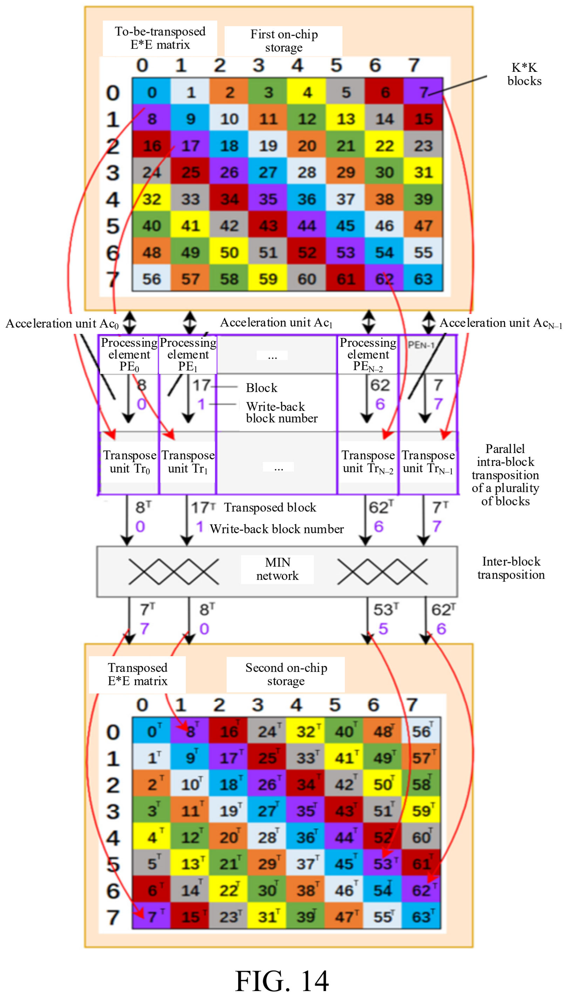

FIG. 14 is a schematic diagram of a structure of a transpose module used in, for example, an FHE chip according to another embodiment of this specification. As shown in FIG. 14, the transpose module may include a first on-chip storage, and N acceleration units $Ac_0$ to $Ac_{N-1}$, a MIN network, and a second on-chip storage. Each acceleration unit $Ac_i$ may include a processing element $PE_i$ and a transpose unit $Tr_i$. The processing element $PE_i$ is configured to compute read positions and write-back positions of blocks in a column i in the first on-chip storage. The transpose unit $Tr_i$ is configured to transpose the blocks in the column i in the first on-chip storage.

A process of transposing a matrix is described below with reference to the structure of the transpose module shown in FIG. 14.

In a process of performing, for example, an NTT operation, when needing to perform a transpose operation on a matrix M1, a processing element PE in the FHE chip may store the matrix M1 in N first sub-spaces of the first on-chip storage, and send a transpose instruction to the transpose module. The transpose instruction instructs to transpose the matrix M1 stored in the first on-chip storage.

Specifically, as described above, the matrix M1 is, for example, an E*E (for example, 128*128) matrix, and the matrix M1 may be divided into a plurality of blocks based on a block size of K*K (for example, 16*16). In FIG. 9, labels 1, 2, 3, and the like in blocks are used for representing block numbers of the blocks. Through such division, the matrix M1 includes eight columns of blocks and eight rows of blocks. It may be understood that although an example in which the matrix M1 is a square matrix is used for description herein, as described above, a to-be-transposed matrix is not limited to a square matrix, provided that the matrix can be divided into an integer number of blocks.

For example, the first on-chip storage and the second on-chip storage may be implemented as, for example, static random access memories (SRAMs) and random access memories (RAMs). For a matrix size of the matrix M1, the on-chip storage may be divided into eight first sub-spaces, and each first sub-space includes a read-write interface. The processing element PE may separately store the eight columns of blocks into the eight first sub-spaces. The on-chip storage may address, based on a block number through the read-write interface of each first sub-space, each block stored in the first sub-space. For example, as shown in FIG. 14, a block column 0 is stored in a $0^{th}$ first sub-space, that is, the $0^{th}$ first sub-space includes a block 0, a block 8, a block 16, a block 24, a block 32, a block 40, a block 48, and a block 56, and the blocks may be addressed through a read-write interface of the $0^{th}$ first sub-space, that is, the blocks may be separately read.

It may be understood that, although FIG. 14 shows that blocks are stored in the first on-chip storage in a form of an array. Specifically, a column of blocks are stored in a form of a column. This is merely exemplary, and is not intended to limit a specific form of storing a matrix in the first on-chip storage. For example, the first on-chip storage may store each column of blocks in the matrix M1 in a form of a logical column (rather than a form of a physical column). In addition, this specification is not limited to storing one column of blocks in each first sub-space. For example, the matrix M1 may be divided into N block groups, one block group is stored in each first sub-space, and each first sub-space may address each block in the block group.

After the foregoing storage, the processing element PE may send a transpose instruction for the matrix M1 to each processing element $PE_i$. The transpose instruction, for example, includes information indicating the matrix M1 stored in the first on-chip storage. Each processing element $PE_i$ may be connected to one first sub-space, and is configured to read a block from the first sub-space to which the processing element $PE_i$ is connected. Specifically, each processing element $PE_i$ performs a hardware connection to a read-write interface of one first sub-space of the first on-chip storage. After receiving the transpose instruction, each processing element $PE_i$ may start calculating a row number of a to-be-read block based on a total quantity of rows of a block array corresponding to the matrix M1 and a quantity rt of times of reading.

Specifically, in a $1^{st}$ round of transposition, each processing element $PE_i$ may determine blocks, that is, 0, 9, 18, 27, 36, 45, 54, and 63, on a diagonal of the block array, so that eight processing elements $PE_i$ transpose the eight blocks in parallel. The reason for determining a number of the to-be-read block in this manner is that, similar to the first on-chip storage, the second on-chip storage includes eight second sub-spaces, each second sub-space includes a read-write interface and can be used for storing one column of transposed blocks in a transposed matrix. Blocks on the diagonal of the block array in the matrix M1 are not in a same row. Therefore, after transposition, transposed blocks corresponding to the blocks are not in a same column, so that eight transposed blocks corresponding to the eight blocks can be stored in the second on-chip storage in parallel.

Each transpose unit $Tr_i$ includes the systolic array as shown in FIG. 10. Alternatively, each transpose unit may include the systolic array A1 and the systolic array A2 shown in FIG. 13, which are used to perform pipelined transpose processing on blocks in one storage sub-space.

Processing elements $PE_i$ respectively perform a hardware connection to transpose units $Tr_i$. After each processing element $PE_i$ determines a row number of the to-be-read block, the processing element $PE_i$ reads, row by row, one row of data in a block corresponding to a number of the block through a read-write interface of a first sub-space connected to the processing element $PE_i$. As described above for step S901, similarly, the row of data is stored in a column of storage locations in a systolic array row by row based on a systolic transfer of the systolic array in a row direction.

Each processing element $PE_i$ also determines, as described above, a position of a transposed block corresponding to the block in the transposed matrix. The position may, for example, include a block column number t and a block row number k of the transposed block in a second block array corresponding to a matrix M2. Then, each processing element $PE_i$ may send a read first block along with the row number k and the column number t of the corresponding transposed block to a transpose unit $Tr_i$ to which the processing element $PE_i$ is connected. After receiving the foregoing data, the transpose unit may store the row number k and the column number t in a particular register, and transpose the first block to obtain a second block.

Each transpose unit $Tr_i$ is connected to an input port of a MIN network (which is referred to as MIN for short in the following). Each transpose unit may input data stored in each row of storage locations in the systolic array (that is, row data of the second block) to the input port of the MIN row by row, and may also input a row number and a column number of the second block to the input port of the MIN. An output port of the MIN is connected to each second sub-space of a second storage space.

For example, a processing element $PE_1$ reads a block 17 from the first on-chip storage based on a calculated row number j=2 of a to-be-read block, determines a column number t=2 and a row number k=1 (shown in the figure as a write-back block number) of a transposed block $17^T$ corresponding to the block 17, and sends the block, the column number t (not shown in FIG. 13), the row number k to the transpose unit $Tr_1$. The transpose unit $Tr_1$ transposes the block 17 to obtain the transposed block $17^T$ of the block 17, and transmits the transposed block $17^T$, the column number t, and the row number k to the MIN network.

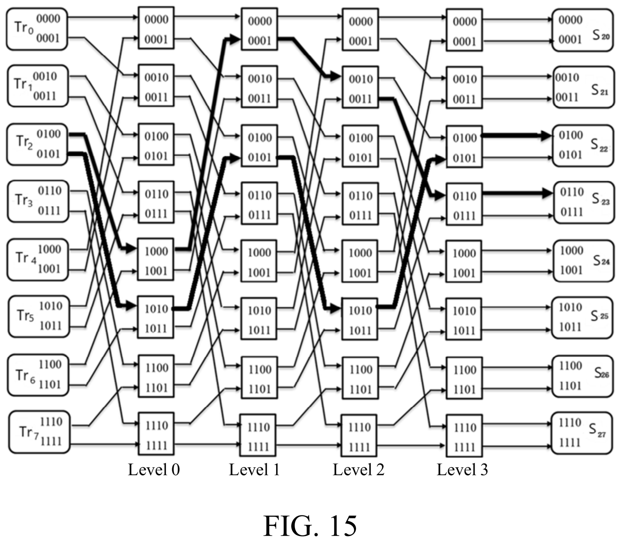

FIG. 15 is a schematic diagram of a structure of a MIN network according to an embodiment of this specification.

As shown in FIG. 15, each of the foregoing transpose units $Tr_i$ may include two output ports configured to be connected to a MIN, and N=8 transpose units may include 2*8=16 output ports configured to be connected to the MIN. Different output ports have different output addresses. Generally, the output addresses may be allocated to the 16 output ports by using a bit sequence having a length of 4 and according to an arrangement order of eight transpose units starting from 1. Each second sub-space $S_{2i}$ in a second on-chip storage may include two input ports configured to be connected to the MIN, and N=8 second sub-spaces $S_{2i}$ may include 2*8=16 input ports configured to be connected to the MIN. Different input ports have different input addresses. Generally, the input addresses may be allocated to the 16 input ports by using a bit sequence having a length of 4 and according to an arrangement order of eight second sub-spaces starting from 1.

The MIN may include at least one of networks such as a Benes network, an Omega network, a Baseline network, and a Butterfly network.

The MIN may include N*M switching units divided into M levels, from a level 0 to a level M-1. For any level in the M levels, a quantity of switching units in the MIN that belong to the level is N. Depending on a network type of the MIN, a quantity M of levels may be different. When a value of a quantity N of transpose units is $2^{k-1}$, for a network of a type like an Omega network, a Baseline network, or a Butterfly network, a value of M is k. For a Benes network, a value of M is 2k-1.

For a MIN of N=8, input addresses of 16 input ports of eight switching units of a same level may be represented by using a bit sequence having a length of 4, and output addresses of the 16 output ports of the eight switching units of the same level may be represented by using a bit sequence having a length of 4.

Depending on the type of the MIN, two output ports that belong to a same transpose unit may be connected to a same switching unit that belongs to a first level in the MIN, or may be connected to different switching units that belong to the first level in the MIN. Two input ports that belong to a same second sub-space are connected to a same switching unit that belongs to a second level in the MIN, and input ports that belong to different second processing elements are connected to different switching units that belong to the second level in the MIN. The first level and the second level are respectively a highest level and a lowest level in the M levels. In other words, the first level is 0 and the second level is M-1, or the first level is M-1 and the second level is 0.

Refer to the foregoing descriptions of FIG. 12. A connection between the systolic array and the input port of the MIN is configured as that a register of a higher column number in the systolic array is connected to a higher-order data line of the input port of the MIN, and a register of a lower column number in the systolic array is connected to a lower-order data line of the input port of the MIN, so that a row of data in the systolic array transmitted from the systolic array to the input port of the MIN is row data of a transposed block of a block.

Specifically, a transpose unit $Tr_2$ is used as an example. In a 1st round of transposition, the transpose unit $Tr_2$ transposes a block 18, and transmits rows of data of a transposed block $18^T$ to the MIN row by row. The transpose unit $Tr_2$ may select either of two output addresses (for example, 0101) of the transpose unit $Tr_2$ to send the rows of data of the transposed block $18^T$ along with a row number and a column number (that is, a column 2) of the block $18^T$. In addition, the transpose unit $Tr_2$ may determine, based on the column number of the transposed block $18^T$, that the rows of data and the row number of the transposed block $18^T$ need to be sent to a second sub-space $S_{22}$ corresponding to the column 2. The transpose unit $Tr_2$ may select any input address (for example, 0100) of the second sub-space $S_{22}$ as a destination address for receiving the data. Then, the transpose unit $Tr_2$ may transmit the rows of data and the row number of the transposed block $18^T$, and the destination address 0100 row by row to an address "1010" in a level 0 of the MIN to which the output address "0101" of the transpose unit $Tr_2$ is connected.

In the MIN, data that includes the rows of data of the transposed block $18^T$ and a row number of the block 18 can be routed according to the destination address.

The switching unit may be a functional switching unit including two input ports and two output ports. In the following, for a same switching unit, an input port with a greater input address is referred to as a high-address input port, and an input port with a smaller input address is referred to as a low-address input port. Similarly, an output port with a greater output address is referred to as a high-address output port, and an output port with a smaller output address is referred to as a low-address output port. The switching unit internally includes two working modes, and the two working modes are denoted as pass-through and crossover herein.

When a working mode of the switching unit is pass-through, the high-address input port is connected to the high-address output port, and the low-address input port is connected to the low-address output port. In this case, switching data that enters the switching unit through the high-address input port is output from the high-address output port of the switching unit. Switching data that enters the switching unit through the low-address input port is output from the low-address output port of the switching unit.

When a working mode of the switching unit is crossover, the high-address input port is connected to the low-address output port, and the low-address input port is connected to the high-address output port. In this case, switching data that enters the switching unit through the high-address input port is output from the low-address output port of the switching unit. Switching data that enters the switching unit through the low-address input port is output from the high-address output port of the switching unit.

When a transpose unit inputs data to the MIN through an output address of a bit sequence $s_3s_2s_1s_0$ and specifies a destination address is of a bit sequence $d_3d_2d_1d_0$, the switching unit in the MIN may route and transmit the switching data based only on the bit sequence $d_3d_2d_1d_0$, or the switching unit may route and transmit the switching data based on the bit sequence $s_3s_2s_1s_0$ and the bit sequence $d_3d_2d_1d_0$.

When the MIN routes and transmits the switching unit based on the destination address, that is, the switching unit in the MIN routes and transmits the switching unit based only on the bit sequence $d_3d_2d_1d_0$, a switching unit at any level q may determine an output port based on a length of a bit sequence. For example, when the length of the bit sequence is 4, the switching unit may determine the output port based on $d_{4-1-q}$ in the bit sequence $d_3d_2d_1d_0$, that is, selects a $(4-q)^{th}$ bit from the bit sequence $d_3d_2d_1d_0$ in ascending order to determine the output port. Specifically, when a value of the $(4-q)^{th}$ bit is 0, the switching data is output from the low-address output port, or when a value of the $(4-q)^{th}$ bit is 1, the switching data is output from the high-address output port. In this way, a switching unit belonging to the level 0 needs to use $d_3$ in the bit sequence $d_3d_2d_1d_0$ to determine the output port, a switching unit belonging to a level 1 needs to use $d_2$ in the bit sequence $d_3d_2d_1d_0$ to determine the output port, a switching unit belonging to a level 2 needs to use $d_1$ in the bit sequence $d_3d_2d_1d_0$ to determine the output port, and a switching unit belonging to a level 3 needs to use $d_0$ in the bit sequence $d_3d_2d_1d_0$ to determine the output port. More specifically, when a value of $d_{4-1-q}$ is 0, the switching unit may select a working mode from pass-through and crossover, to ensure that the switching data is output from the low-address output port; or when a value of $d_{4-1-q}$ is 1, the switching unit may select a working mode from pass-through and crossover, to ensure that the switching data is output from the high-address output port.

Specifically, as described above, the transpose unit $Tr_2$ determines the destination address of the data is 0100. After the data is sent to the address "1010" in the level 0, refer to FIG. 15. The switching unit belonging to the level 0 selects a $4^{th}$ bit in 0100 to determine the working mode. Because the $4^{th}$ bit is 0, the switching unit belonging to the level 0 outputs the data from a low-address output port (that is, 1010) of the switching unit. According to a similar principle, the switching unit belonging to the level 1 outputs data from a high-address output port (that is, 0101) of the switching unit, the switching unit belonging to the level 2 outputs data from a low-address output port (that is, 1010) of the switching unit, and the switching unit belonging to the level 3 outputs data from a low-address output port (that is, 0100) of the switching unit, so that the data arrives at $S_{22}$ from an input port with an input address of 0100.

In another embodiment, when the MIN routes and transmits the switching data based on a connection relationship, that is, the switching unit in the MIN routes and transmits the switching data based on the bit sequence $s_3s_2s_1s_0$ and the bit sequence $d_3d_2d_1d_0$, the switching unit may calculate a target bit sequence in a same space according to $x = s^d$. s is a value of the bit sequence $s_3s_2s_1s_0$, d is a value of the bit sequence $d_3d_2d_1d_0$, and x is a value of the target bit sequence. The target bit sequence is denoted as $x_3x_2x_1x_0$ herein. A switching unit at any level q may determine a working mode based on a length of a bit sequence. For example, when the length of the bit sequence is 4, the switching unit may determine the working mode based on $x_{4-1-q}$ in the bit sequence $x_3x_2x_1x_0$, that is, selects a $(4-q)^{th}$ bit from the bit sequence $x_3x_2x_1x_0$ in ascending order to determine the working mode. Specifically, when a value of the $(4-q)^{th}$ bit is 0, pass-through is selected as the working mode, or when a value of the $(4-q)^{th}$ bit is 1, crossover is selected as the working mode. In this way, a switching unit belonging to the level 0 needs to use $x_3$ in the bit sequence $x_3x_2x_1x_0$ to determine the working mode, a switching unit belonging to a level 1 needs to use $x_2$ in the bit sequence $x_3x_2x_1x_0$ to determine the working mode, a switching unit belonging to a level 2 needs to use $x_1$ in the bit sequence $x_3x_2x_1x_0$ to determine the working mode, and a switching unit belonging to a level 3 needs to use $x_0$ in the bit sequence $x_3x_2x_1x_0$ to determine the working mode.

After the MIN network routes, to each second sub-space row by row, each piece of data including each row of data of a transposed block and a row number corresponding to the transposed block, the second sub-space stores the transposed block to a corresponding row.

After the $1^{st}$ round of transpose operation is completed as described above, a $2^{nd}$ round of transpose operation may start in the transpose module.

As described above, it is assumed that each transpose unit includes the structure shown in FIG. 13. For a 16*16 block, each processing element may store, during the $1^{st}$ clock cycle to a $16^{th}$ clock cycle, each target block in the $1^{st}$ round of transpose operation in a systolic array A1 of a corresponding transpose unit. After starting the $1^{st}$ round of transpose operation, each processing element may increment a value of a quantity of times of reading stored in a register in each acceleration unit by 1, and then determine a number of a next to-be-read block based on the value of the quantity of times of reading and a block column number i corresponding to the acceleration unit. In addition, during the $17^{th}$ clock cycle to the $32^{nd}$ clock cycle, each target block in the $2^{nd}$ round of transpose operation may be stored in a systolic array A2 of a corresponding transpose unit.

For example, when a counter value is 1, a processing element $PE_0$ may calculate a row number of a to-be-read as 0+1=1. Therefore, the processing element $PE_0$ may store a block 8 in a systolic array A2 of a transpose unit $Tr_0$ during the $17^{th}$ clock cycle to the $32^{nd}$ clock cycle, to transpose the block 8. Similarly, other processing elements may store a block 17, a block 26, a block 35, a block 44, a block 53, a block 62, and a block 7 in systolic arrays A2 of transpose units during the 17th clock cycle to the 32nd clock cycle for parallel transposition.

In addition, each processing element further determines a column number and a row number of a transposed block corresponding to each block, and transmits the block along with the column number and the row number of the transposed block to each transpose unit.

After transposing a block, each transpose unit obtains a transposed block, determines, based on a column number of the transposed block, a destination address of a MIN corresponding to the transposed block, and sends data, the destination address, and a row number of the transposed block to the MIN by using an input address of the transposed block, to perform inter-block transposition on each transposed block.

Specifically, the transpose unit $Tr_2$ is used as an example. In the 2nd round of transposition, the transpose unit $Tr_2$ transposes a block 26. The transpose unit $Tr_2$ may select either of two output addresses (for example, 0100) of the transpose unit $Tr_2$ to transmit rows of data of a transposed block $26^T$ and a row number of the transposed block $26^T$. In addition, the transpose unit $Tr_2$ may determine, based on a column number (that is, a column 3) of a transposed block column corresponding to the transposed block $26^T$, that the rows of data and the row number of the transposed block $26^T$ need to be sent to a second sub-space $S_{23}$ corresponding to the column 3. The transpose unit $Tr_2$ may select any input address (for example, 0110) of the second sub-space $S_{23}$ as a destination address for receiving the data. Then, refer to FIG. 15. The transpose unit $Tr_2$ may transmit the rows of data of the transposed block $26^T$, the row number, and the destination address 0110 to an address "1000" in a level 0 of the MIN to which the output address "0100" of the transpose unit $Tr_2$ is connected. A switching unit at each level in the MIN may similarly route the data based on the destination address 0110 as described above, to send the rows of data of the transposed block $26^T$ and a row number of the block 26 to the second sub-space $S_{23}$.

The transpose module may store a transposed matrix of a matrix M1 in the second on-chip storage through a plurality of rounds of transpose operations similar to the process described above. For a 128*128 matrix M1, the transpose module may complete transposition on the matrix M1 during 128 clock cycles.

In the 1990s, improvements in a technology can be clearly categorized as hardware improvements (for example, improvements to a circuit structure such as a diode, a transistor, a switch, etc.) and software improvements (improvements to a method procedure). However, with the development of technology, improvements of many method procedures can be considered as direct improvements of hardware circuit structures. Designers almost all program an improved method procedure to a hardware circuit, to obtain a corresponding hardware circuit structure. Therefore, it does not mean that the improvement of a method procedure cannot be implemented by using a hardware entity module. For example, a programmable logic device (PLD) such as a field programmable gate array (FPGA) is a type of integrated circuit whose logic function is determined by a user by programming the device. The designers perform voluntary programming to "integrate" a digital system into a single PLD without requiring a chip manufacturer to design and prepare a dedicated integrated circuit chip. In addition, instead of making an integrated circuit chip manually, the programming is mostly implemented by using "logic compiler (logic compiler)" software, which is similar to the software compiler used to write programs. Original code before compiling is also written in a specific programming language, which is referred to as Hardware Description Language (HDL). There are many types of HDLs, such as Advanced Boolean Expression Language (ABEL), Altera Hardware Description Language (AHDL), Confluence, Cornell University Programming Language (CUPL), HDCal, Java Hardware Description Language (JHDL), Lava, Lola, MyHDL, PALASM, and Ruby Hardware Description Language (RHDL). Currently, Very-High-Speed Integrated Circuit Hardware Description Language (VHDL) and Verilog are most commonly used. A person skilled in the art should also understand that as long as a method procedure is logically programmed and then programmed to an integrated circuit by using the foregoing hardware description languages, a hardware circuit that implements the logical method procedure can be easily obtained.

The controller can be implemented in any suitable manner. For example, the controller can take the form of, for example, a microprocessor or processor and a computer-readable medium storing computer-readable program code (for example, software or firmware) executable by the processor, a logic gate, a switch, an application-specific integrated circuit (ASIC), a programmable logic controller, and an embedded microcontroller. Examples of the controller include, but are not limited to, the following microcontrollers: ARC 625D, Atmel AT91SAM, Microchip PIC18F26K20, and Silicone Labs C8051F320. The memory controller can also be implemented as part of the memory control logic. A person skilled in the art also appreciate that, in addition to implementing, by logically programming the method steps, the controller in the form of pure computer-readable program code, it is also possible to implement the controller in the form of a logic gate, switch, application-specific integrated circuit, programmable logic controller, and embedded microcontroller and other forms to achieve the same function. Such a controller can thus be considered as a hardware component and apparatuses included therein for implementing various functions can also be considered as structures inside the hardware component. Alternatively, apparatuses configured to implement various functions can be considered as both software modules implementing the method and structures inside the hardware component.

The system, the apparatus, the module or the unit described in the foregoing embodiments may be specifically implemented by a computer chip or an entity, or implemented by a product having a certain function. A typical implementation device is a server system. Certainly, this application does not preclude that, with the development computer technologies in the future, the computer for implementing the functions in the foregoing embodiments may be, for example, a personal computer, a laptop computer, an in-vehicle man-machine interactive device, a cellular phone, a camera phone, a smartphone, a personal digital assistant, a media player, a navigation device, an email device, a game console, a tablet computer, a wearable device, or a combination of any of the devices.

Although the one or more embodiments of this specification provide method operation steps described in the embodiments or flowcharts, more or fewer operation steps may be included based on conventional means or non-creative means. The order of the steps listed in the embodiment is merely one of a plurality of step execution orders, and does not indicate the only execution order. When an actual apparatus or terminal product is executed, sequential execution or parallel execution may be performed according to the method orders shown in the embodiments or the accompanying drawings (for example, in a parallel processor or multi-thread processing environment, and even a distributed data processing environment). The term "include," "comprise," or any other variants thereof is intended to cover a non-exclusive inclusion, so that a process, a method, a product, or a device that includes a series of elements not only includes such elements, but also includes other elements not expressly listed, or further includes elements inherent to such a process, method, product, or device. Unless otherwise indicated, other same or equivalent elements are not excluded from existing in the process, the method, the product, or the device that includes the elements. For example, the terms such as "first" and "second" are used to denote names, and do not denote any particular order.

For ease of description, when the foregoing apparatus is described, the apparatus is divided into various modules according to functions for separately description. Certainly, during implementation of one or more modules of this specification, functions of various modules may be implemented in the same piece of or a plurality of pieces of software and/or hardware, or modules implementing the same function may be implemented by using a combination of a plurality of submodules or subunits. The foregoing described apparatus embodiments are merely examples. For example, the unit division is merely logical function division and there may be other division manners in other implementations. For example, a plurality of units or components may be combined or integrated into another system, or some features may be omitted or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The present invention is described with reference to the flowcharts and/or block diagrams of the method, the apparatus (system), and the computer program product according to embodiments of the present invention. It should be understood that computer program instructions can implement each procedure and/or block in the flowcharts and/or block diagrams and a combination of procedures and/or blocks in the flowcharts and/or block diagrams. These computer program instructions may be provided to a general-purpose computer, a special-purpose computer, an embedded processor, or a processor of another programmable data processing device to generate a machine, so that an apparatus configured to implement functions specified in one or more procedures in the flowcharts and/or one or more blocks in the block diagrams is generated by using instructions executed by the computer or the processor of another programmable data processing device.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may further be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, a computer device includes one or more processors (such as CPUs), an input/output interface, a network interface, and a memory.

The memory may include a form such as a volatile memory, a random access memory (RAM), and/or a non-volatile memory such as a read-only memory (ROM) or a flash memory (flash RAM) in a computer-readable medium. The memory is an example of the computer-readable medium.

The computer-readable medium includes a non-volatile medium and a volatile medium, a removable medium and a non-removable medium, which may implement storage of information by using any method or technology. The information may be a computer-readable instruction, a data structure, a program module, or other data. Examples of a computer storage medium include but are not limited to a phase change memory (PRAM), a static random access memory (SRAM), a dynamic random access memory (DRAM), other type of random access memory (RAM), a read-only memory (ROM), an electrically erasable programmable read-only memory (EEPROM), a flash memory or other memory technology, a compact disc read-only memory (CD-ROM), a digital versatile disc (DVD) or other optical storage, a cassette tape, a magnetic tape, a magnetic disk storage or other magnetic storage device, or any other non-transmission medium, which may be configured to store information accessible by a computing device. According to limitations of this specification, the computer-readable medium does not include transitory computer-readable media (transitory media), such as a modulated data signal and a modulated carrier.

A person skilled in the art should understand that one or more of embodiments of this specification may be provided as a method, a system, or a computer program product. Therefore, the one or more of embodiments of this specification may use a form of hardware-only embodiments, software-only embodiments, or embodiments with a combination of software and hardware. Moreover, the one or more of embodiments of this specification may use a form of a computer program product that is implemented on one or more computer-usable storage media (including but not limited to a disk memory, a CD-ROM, an optical memory, and the like) that include computer-usable program code.

The one or more of embodiments of this specification can be described in the general context of computer-executable instructions executed by a computer, for example, a program module. Generally, the program module includes a routine, a program, an object, a component, a data structure, and the like for executing a particular task or implementing a particular abstract data type. The one or more of embodiments of this specification may also be implemented in a distributed computing environment in which tasks are performed by remote processing devices connected by using a communication network. In a distributed computing environment, the program module may be located in both local and remote computer storage media including storage devices.

Embodiments of this specification are all described in a progressive manner, for same or similar parts in the embodiments, refer to these embodiments. Descriptions of each embodiment focus on a difference from other embodiments. Especially, a system embodiment is basically similar to a method embodiment, and therefore is described briefly; for related parts, reference may be made to partial descriptions in the method embodiment. In the descriptions of this specification, descriptions of a reference term such as "an embodiment," "some embodiments," "an example," "a specific example," or "some examples" means that a feature, structure, material, or characteristic that is described with reference to the embodiment or the example is included in at least one embodiment or example of the embodiments of this specification. In this specification, schematic descriptions of the foregoing terms are not necessarily directed at the same embodiment or example. Besides, the specific features, the structures, the materials or the characteristics that are described may be combined in proper manners in any one or more embodiments or examples. In addition, a person skilled in the art may integrate or combine different embodiments or examples described in the specification and features of the different embodiments or examples as long as they are not contradictory to each other.

The foregoing descriptions are merely embodiments of the one or more of embodiments of this specification, and are not intended to limit the one or more of embodiments of this specification. For a person skilled in the art, various modifications and changes may be made to the one or more of embodiments of this specification. Any modification, equivalent replacement, or improvement made without departing from the spirit and principle of this specification shall fall within the scope of the claims.

**Claims**

1. A matrix transpose method, performed by a transpose module, wherein the transpose module comprises a first storage space, a second storage space, and N acceleration units, a first matrix is stored in the first storage space, the first matrix corresponds to a first block array formed by blocks in M rows and N columns, the N acceleration units respectively correspond to N block columns, and the method comprises:

   determining, by an $i^{th}$ acceleration unit based on i, M, and a quantity of times the $i^{th}$ acceleration unit reads a block column i in the first block array, a row number j of a to-be-read block in the block column i, and position information that is of a transposed block corresponding to the to-be-read block and that is in a second block array, wherein the second block array corresponds to a second matrix, and the second matrix is a transposed matrix of the first matrix;

   reading, by the $i^{th}$ acceleration unit, a first block from the block column i based on the row number j of the to-be-read blocks;

   transposing, by the $i^{th}$ acceleration unit, the first block to obtain a second block; and

   storing, by the $i^{th}$ acceleration unit, the second block in the second storage space based on the position information.

2. The method according to claim 1, wherein M is less than N, the second block array comprises blocks in M rows and N columns, and the position information comprises a row number k and a column number t of the second block in the second block array.

3. The method according to claim 2, wherein the determining, by an $i^{th}$ acceleration unit based on i, M, and a quantity of times the $i^{th}$ acceleration unit reads a block column i in the first block array, a row number j of a to-be-read block in the block column i comprises:

dividing, by the $i^{th}$ acceleration unit, the first block array based on a block square matrix of M rows ∗ M columns, and determining the row number j based on the quantity of times of reading and a column number that is of a block column i and that is in a first block square matrix corresponding to the block column i.

4. The method according to claim 3, wherein the first block square matrix comprises a padded block column.

5. The method according to claim 3, wherein the row number k corresponding to the transposed block is the column number that is of the block column i in the first block array and that is in the first block square matrix corresponding to the block column i.

6. The method according to claim 2, wherein a column number of the first matrix is greater than a row number of the first matrix, and the method further comprises: after the second block array is stored in the second storage space, dividing, by the second storage space, the second block array based on a block array of M rows ∗ M columns, to obtain a plurality of second block square matrices, and providing the second matrix based on the plurality of second block square matrices.

7. The method according to claim 2, wherein a row number of the first matrix is greater than a column number of the first matrix, and the method further comprises: dividing, by the first storage space, the first matrix based on a preset block size, to obtain a third block array; and dividing, by the first storage space, the third block array based on a block square matrix of M rows ∗ M columns, and obtaining the first block array based on a divided third block array.

8. The method according to claim 2, wherein the transpose module comprises a multistage interconnection network MIN, the MIN is connected to the N acceleration units, the second storage space comprises N second sub-spaces sequentially arranged, and each second sub-space comprises a read-write interface, and is used for storing a column of blocks in the second block array; and

the storing, by the $i^{th}$ acceleration unit, the second block in the second storage space based on the position information comprises:

sending, by the $i^{th}$ acceleration unit, to the MIN, the second block, the row number k, and a destination address that corresponds to the column number t and that corresponds to a target read-write interface;
transmitting, by the MIN, the second block and the row number k to a read-write interface of a second sub-space based on the destination address; and
storing, by the second sub-space, the second block in a column t and a row k of the second block array based on k.

9. The method according to claim 1, wherein the $i^{th}$ acceleration unit comprises a register, a value stored in the register indicates the quantity of times of reading, and the method further comprises: reading, by the $i^{th}$ acceleration unit from the register, the value of the quantity of times of reading, and incrementing the value stored in the register by 1.

10. The method according to claim 1, wherein each acceleration unit comprises a first processing element and a storage array, and the transposing, by the $i^{th}$ acceleration unit, the first block to obtain a second block comprises:

storing row by row, in a column of storage locations in the first storage array by the first processing element in the $i^{th}$ acceleration unit based on a systolic processing performed by the storage array in the $i^{th}$ acceleration unit on data in a row direction, each row of data in the first block stored in the first storage space; and
outputting, as row data in the second block by the storage array in the $i^{th}$ acceleration unit through a systolic processing performed on the data in a column direction, data stored in each row of storage locations in the first storage array.

11. A transpose module, comprising a first storage space, a second storage space, and N acceleration units, wherein a first matrix is stored in the first storage space, the first matrix corresponds to a first block array formed by blocks in M rows and N columns, and the N acceleration units respectively correspond to N block columns; and

an $i^{th}$ acceleration unit corresponding to a block column i of the first block array is configured to perform the method of any one of claims 1 to 10.

12. A chip, comprising a processing element and the transpose module according to claim 11, wherein the processing element is configured to store a first matrix into a first storage space, and instruct the transpose module to perform the method of any one of claims 1 to 10.

FIG. 1

FIG. 2

FIG. 3

FIG. 4

FIG. 5

FIG. 6

FIG. 7

FIG. 8

Store each row of data in a first block in a column of storage locations in a systolic array row by row based on systolic transfer of the systolic array in a row direction — S901

Store, as row data in a second storage space based on systolic transfer of the systolic array in a column direction, data stored in each row of storage locations in the systolic array — S903

## FIG. 9

Output

Input

| RF 0, 0 | RF 0, 1 | RF ... | RF ... | RF 0, 14 | RF 0, 15 |
| RF 1, 0 | RF 1, 1 | RF ... | RF ... | RF 1, 14 | RF 1, 15 |
| RF ... | RF ... | RF ... | RF ... | RF ... | RF ... |
| RF ... | RF ... | RF ... | RF ... | RF ... | RF ... |
| RF 14, 0 | RF 14, 1 | RF ... | RF ... | RF 14, 14 | RF 14, 15 |
| RF 15, 0 | RF 15, 1 | RF ... | RF ... | RF 15, 14 | RF 15, 15 |

## FIG. 10

FIG. 11

FIG. 12

Output

Systolic array A1

Input

Output

Systolic array A2

Input

FIG. 13

FIG. 14

FIG. 15

Europäisches Patentamt

European Patent Office

Office européen des brevets

# EUROPEAN SEARCH REPORT

Application Number

EP 25 22 0489

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 069 968 A (ALIPAY HANGZHOU TECH CO LTD) 24 May 2024 (2024-05-24) * paragraphs [0005], [0006], [0065] – [0139]; figures 3-9 * ----- | 1-12 | INV. G06F7/78 |
| | | | TECHNICAL FIELDS SEARCHED (IPC) |
| | | | G06F |

The present search report has been drawn up for all claims

| Place of search | Date of completion of the search | Examiner |
|---|---|---|
| Munich | 13 May 2026 | Prins, Leendert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 22 0489

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2026

| Patent document cited in search report | Publication date | Patent family member(s) | Publication date |
|---|---|---|---|
| CN 118069968 A | 24-05-2024 | NONE | |

EPO FORM P0459

For more details about this annex : see Official Journal of the European Patent Office, No. 12/82